Europäisches Patentamt

European Patent Office

Office européen des brevets

(19)

(11) Veröffentlichungsnummer: **0 196 539
B1**

(12) **EUROPÄISCHE PATENTSCHRIFT**

(45) Veröffentlichungstag der Patentschrift:
27.06.90

(51) Int. Cl.$^5$: **H02P 7/00**, H02P 5/17

(21) Anmeldenummer: 86103610.1

(22) Anmeldetag: 18.03.86

(54) **Digitale Drehzahlregelschaltung für einen Gleichstrommotor.**

(30) Priorität: 21.03.85 DE 3510244

(43) Veröffentlichungstag der Anmeldung:
08.10.86 Patentblatt 86/41

(45) Bekanntmachung des Hinweises auf die Patenterteilung:
27.06.90 Patentblatt 90/26

(84) Benannte Vertragsstaaten:
BE CH DE FR GB IT LI NL SE

(56) Entgegenhaltungen:
EP-A- 0 078 387
EP-A- 0 102 248
DE-A- 3 227 706
US-A- 4 413 212

IECI'78 PROCEEDINGS - INDUSTRIAL APPLICATIONS
OF MICROPROCESSORS, March 20-22, 1978,
Seiten 174-180, Philadelphia, US; B. DE FORNEL et al.:
"Application of the microprocessors on some electrical
variable speed drive"

(73) Patentinhaber: Siemens Aktiengesellschaft,
Wittelsbacherplatz 2, D-8000 München 2(DE)

(72) Erfinder: Treffer, Gerhard, Dipl.-Ing.,
Schlesierstrasse 14, D-8028 Taufkirchen(DE)

## Beschreibung

Die Erfindung betrifft eine Drehzahlregelschaltung gemäß dem Oberbegriff des Patentanspruchs 1.

Bei Druckereinrichtungen wird beispielsweise der Druckerwagen von einem Gleichstrommotor angetrieben. Bei üblichen Drehzahlregelschaltungen für GLeichstrommotore in Druckerantrieben erfolgt die Drehzahlregelung durch analogarbeitende Spannungsregelkreise über die Ankerspannung. Dabei wird die Ist-Drehzahl mittels eines Drehzahlgebers, der mit der Motorwelle verbunden ist, und einem Frequenz-Spannungs-Wandler in eine drehzahlproportionale Spannung umgewandelt. Diese wird mit einer Sollspannung, die der gewünschten Drehzahl entspricht verglichen, und die Spannungsdifferenz zur Steuerung der Ankerspannung verwendet.

.Andere, bereits vorgeschlagene Drehzahlregelschaltungen verwenden Phasenregelkreise (phase locked loops) zur Steuerung des Ankerstromes. Hierbei wird die Ist-Drehzahl des Gleichstrommotors mittels eines Drehzahlgebers, der mit der Motorwelle verbunden ist, erfaßt und mit einer Sollfrequenz, die der gewünschten Drehzahl entspricht, verglichen. Die hierbei entstehende Phasendifferenz wird zur Steuerung des Ankerstromes verwendet.

Bei diesen Drehzahlregelschaltungen ist eine geregelte Beschleunigung bis zur konstanten Drehzahl, bzw. eine geregelte Abbremsung bis zum Stillstand nicht vorgesehen. Der Anlauf bzw. Bremsweg, der aufgrund von Reibungs- und Spannungsschwankungen sehr starken Störungen unterliegt, wurde dabei so bemessen, daß bei ungünstiger Reibung und generatorischer Bremswirkung der elektromotorischen Kraft ein zuverlässiger Betrieb sichergestellt ist.

Aus der EP-A 0 078 387 ist eine Anordnung zum Steuern der Geschwindigkeit eines Druckkopfes bekannt, wobei dieser Druckkopf mittels eines Antriebsmotors in beiden Richtungen entlang einer Druckzeile eines Aufzeichnungsmediums bewegbar ist. Auf der Motorwelle ist ein Drehgeber vorhanden, der Bewegungssignale abgibt und diese Signale werden Verarbeitungsmitteln zugeführt, um eine Fehlerzählung zwischen diesen Signalen mit gespeicherten Daten zu veranlassen. Aus der Fehlerzählung wird anschließend eine Fehlerspannung erzeugt, die wiederum zur Steuerung der Motorwelle herangezogen wird. Die Verarbeitungsmittel passen die gespeicherten Daten in regelmäßigen Abständen den Veränderungen in der Fehlerzählung an. Dadurch werden dynamische Systemwechsel ausgeglichen. Außerdem ermitteln diese Verarbeitungsmittel den Durchschnitt der Fehlerzählung für jede gedruckte Zeile und berichtigen die geänderten Daten auf der Grundlage des Durchschnitts der Fehlerzählung, um die Geschwindigkeit des Druckkopfes in der nächsten Zeile zu steuern. An die Fehlerzählung wird eine nichtlineare Fehlersignalskala angelegt, je nach dem, ob der Druckkopf anläuft, druckt oder anhält, wodurch der Skalenfaktor in Abhängigkeit von der Geschwindigkeit beim Anfahren und beim Halten geändert wird und während des Druckens konstant bleibt.

Der Erfindung liegt die Aufgabe zugrunde, eine Drehzahlregelschaltung anzugeben, durch die eine geregelte Beschleunigung bis zur Solldrehzahl bzw. eine geregelte Abbremsung bis zum Stillstand für einen Gleichstrommotor bewirkt wird.

Diese Aufgabe wird erfindungsgemäß durch die im Patentanspruch 1 angegebenen Merkmale gelöst.

Bei der erfindungsgemäßen Drehzahlregelschaltung sind die Beschleunigungs- bzw. Verzögerungswerte vorgebbar. Hierdurch sind die Beschleunigungs- und Verzögerungskräfte für den Gleichstrommotor begrenzbar. Dies wirkt sich vorteilhaft auf die Lebensdauer und Zuverlässigkeit der Antriebsmechanik aus, wenn der Gleichstrommotor zum Antrieb eines Druckerwagens verwendet wird.

Die Regelung des Anlaufs und des Bremslaufs verringert die starken Schwankungen des Anlaufbzw. Bremsweges, wie sie durch Reibungs- und Spannungsschwankungen hervorgerufen werden. Die Druckerabmessungen können verkleinert werden, da die Anlauf- und Bremswegtoleranzen, hervorgerufen durch die Reibungs- und Spannungsschwankungen ausgeregelt werden.

Aufgrund des geregelten Anlaufs bzw. Bremslaufs in der erfindungsgemäßen Drehzahlregelschaltung sind die von der Stromversorgung benötigten Spitzenleistungen reduzierbar.

Bei Verwendung der erfindungsgemäßen Drehzahlregelschaltung können kleinere und billigere Gleichstrommotore für den Druckerantrieb verwendet werden.

Im folgenden wird die Erfindung anhand von in der Zeichnung dargestellten Ausführungsbeispielen erläutert.

Dabei zeigen

Fig. 1 ein Ausführungsbeispiel der Drehzahlregelschaltung mit einem Stromregler,

Fig. 2 ein anderes Ausführungsbeispiel der Drehzahlregelschaltung, und

Fig. 3 ein Impulsdiagramm zur Erläuterung der Regelung eines Gleichstrommotors.

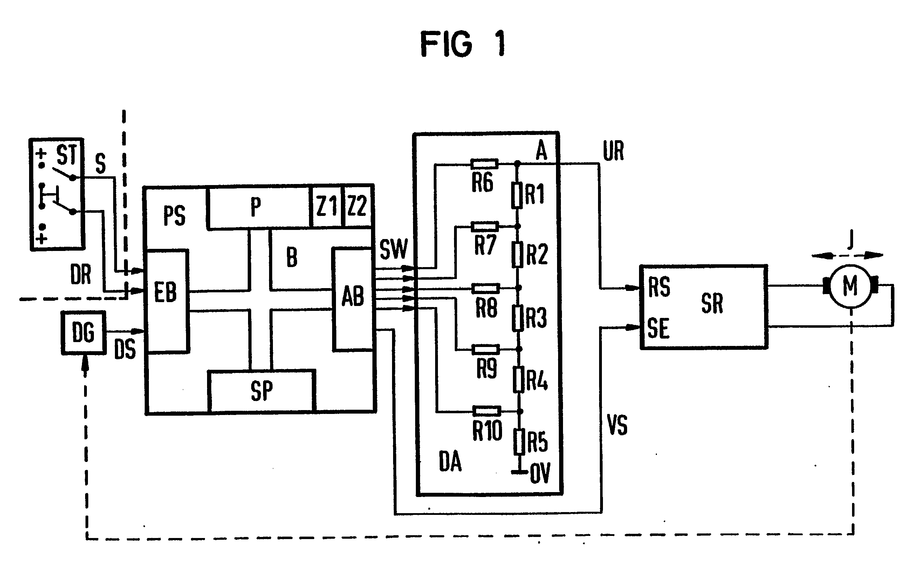

In Fig. 1 ist ein Steuerwerk ST dargestellt, das beispielsweise Bestandteil einer Zeilendruckeinrichtung ist. Das Steuerwek ST weist zwei nicht näher bezeichnete Schalter auf, die in Verbindung mit der Erfindung relevant sind. Das Steuerwerk ST gibt über diese Schalter ein binäres Start-Stopp-Signal S und ein Drehrichtungssignal DR an die Drehzahlregelschaltung. Die Drehzahlregelschaltung enthält einen Gleichstrommotor M, über dessen Anker ein Drehzahlgeber DG angesteuert wird, der ein Drehsignal DS abgibt. Der Drehzahlgeber DG besteht beispielsweise aus einer auf dem Anker befestigten Schlitzscheibe und einer Lichtschranke zur Abtastung der Schlitze. Ausführungsformen von Drehzahlgebern sind in der Druckschrift "Technische Mitteilung aus dem Bereich Bauelemente", Integrierte Drehzahlregelschaltung TCA 955, Seiten 18 und 19 der Fa. Siemens beschrieben. Die Impulsfolge des vom Drehzahlgeber DG abgegeben binären Drehsignals DS ist proportional zur Drehgeschwindigkeit des Gleichstrommotors M. Die Schlitzscheibe des Drehzahlgebers DG ist beispielweise so ausgestaltet, daß die von der Lichtschranke abgetasteten lichtdurchlässigen und lichtundurchlässigen Bereiche einander gleich sind. Hierdurch ist sichergestellt, daß die Impulsfolge der Flanken des Drehsignals DS der Drehgeschwindigkeit des Gleichstrommotors M proportional ist.

Das vom Drehzahlgeber DG abgegebene Drehsignal DS liegt an einem Eingabebaustein EB eines Prozessorsystems PS an, das weiter noch einen Prozessor P mit Zählern Z1, Z2, einen Speicher SP und einen Ausgabebaustein AB enthält, die über einen Bus B zusammengeschaltet sind. Bei dem Prozessorsystem PS handelt es sich um ein Mikroprozessorsystem, das einen sogenannten Timer/Event-Counter(Zähler Z 1) aufweist, und ist beispielsweise durch den Baustein µP D7811 der Firma NEC Electronics GMBH realisiert.

Im Prozessorsystem PS wird aus dem Drehsignal DS ein Steuerwort SW und ein Vorzeichensignal VS ermittelt. Über das Steuerwort SW wird der Wert eines Stromes I, und über das Vorzeichensignal VS dessen Richtung im Gleichstrommotor M eingestellt.

Hierzu liegt das Steuerwort SW, das beispielweise über fünf Leitungen über den Ausgabebaustein AB abgegeben wird, an einem Digital-Analogwandler DA an. Der Digital-Analogwandler DA weist einen Ausgang A auf, der über eine Widerstandskette aus Widerständen R1 bis R5 mit einem Bezugspotential OV verbunden ist. Der Ausgang A und die nicht näher bezeichneten Spannungsteilerpunkte zwischen den Widerständen R1 bis R5 sind in dieser Reihenfolge über Widerstände R6 bis R10 mit den Anschlüssen des Ausgabebausteins AB verbunden, an dem das Steuerwort SW abgreifbar ist. Hierbei ist der höherwertigste Anschluß mit dem Ausgang A verbunden. Der Digital-Analogwandler DA erzeugt aus dem Steuerwort SW eine Referenzspannung UR.

Die vom Digital-Analogwandler DA abgegebene Referenzspannung UR liegt an einem Referenzspannungseingang RS, und das vom Ausgabebaustein AB abgegebene Vorzeichensignal VS liegt an einem Stromrichtungseingang SE eines Stromreglers SR an. Der Stromregler SR ist beispielsweise durch den Baustein PBL 3717 der Firma Rifa realisiert. An den nicht näher bezeichneten Ausgängen des Stromreglers SR ist der Gleichstrommotor M angeschaltet. Über den Wert der am Referenzspannungseingang RS anliegenden Referenzspannung UR ist der Wert des Stromes I, und über die Polarität des am Stromrichtungseingang SE anliegenden Vorzeichensignals VS ist die Richtung des Stromes I durch den Gleichstrommotor M einstellbar.

Im folgenden wird die Wirkungsweise der in Fig. 1 dargestellten Drehzahlregelschaltung erläutert.

Der zeitliche Abstand zwischen den Flanken, das heißt zwischen den Wechseln der binären Zustände des vom Drehzahlgeber DG abgegebenen Drehsignals DS ist umgekehrt proportional zur Drehzahl des Gleichstrommotors M. Nach jedem Wechsel des Drehsignals DS wird der Zählerstand eines Zählers Z1 ausgelesen, wobei der Zähler Z1 nach einem Rücksetzbefehl wieder gestartet wird. Der Zähler Z1 zählt die Anzahl der Perioden eines internen Referenztaktes, die zwischen den Flanken liegen. Der Zählerstand ist hierbei auch proportional zur Drehzahl des Gleichstrommotors M. Es ist für die Erfindung von untergeordneter Bedeutung, ob der Zähler Z1 vorwärts oder rückwärts zählt. Es ist aber sicherzustellen, daß der Zähler Z1 zwischen zwei Wechseln des Drehsignals DS nicht seinen Minimal-bzw. Maximalwert überschreitet.

Der Zählerstand wird von einem im Prozessorsystem PS gespeicherten Sollwert, durch den die Solldrehzahl des Gleichstrommotors M vorgegeben ist, subtrahiert. Durch den hierbei ermittelten Differenzwert ist der Wert des Stromes durch den Gleichstrommotor M, d.h. das Steuerwort SW bestimmt. Durch das Vorzeichen des Differenzwertes in Verbindung mit dem Drehrichtungssignal DR ist die Richtung des Stromes durch den Gleichstrommotor M, d.h. Polarität des Vorzeichensignals VS bestimmt. Das Steuerwort SW und das Vorzeichensignal VS werden über den Ausgabebaustein AB abgegeben. Das Vorzeichensignal VS gelangt direkt, und das Steuerwort SW über den Digital-Analogwandler DA als Referenzspannung UR an den Stromregler SR.

Das Steuerwort SW kann in tabellarischer Form im Speicher SP des Prozessorsystems PS abgelegt sein. In diesem Fall dient der Differenzwert zur Adressierung eines Steuerwortes SW. In einem anderen Fall kann das Steuerwort SW aus dem Differenzwert durch einen Steueralgorithmus gebildet werden.

In einem weiteren Zähler Z2 beispielsweise wird die Anzahl der Wechsel des Drehsignals DS registriert.

Die Polarität des Vorzeichensignals VS hängt vom Drehrichtungssignal DR und von der Tatsache ab, ob die Drehzahl des Gleichstrommotors M über oder unter der Solldrehzahl liegt.

Während der Anlauf- bzw. der Bremsphase des Gleichstrommotors M ist die Beschleunigung bzw. Verzögerung durch eine, im Speicher SP eingeschriebene, wegabhängige Sollwert-Tabelle vorgegeben. Durch den Zählerstand des weiteren Zählers Z2 ist der wegabhängige Sollwert bestimmt, der jeweils zur Bildung des Differenzwertes aus dem Zählerstand des Zählers Z1 und diesem Sollwert verwendet wird. Hierbei ist durch die Anzahl der Wechsel des Drehsignals DS die Wegabhängigkeit des Steuerwortes SW realisiert.

Durch logische Verknüpfung im Prozessorsystem PS wird aus dem vom Steuerwerk ST abgegebenen Start-Stopp-Signal S und dem Drehrichtungssignal DR der Gleichstrommotor M aus dem Stillstand in der gewünschten Drehrichtung bis zur Solldrehzahl beschleunigt bzw. aus dem Konstantlauf mit der Solldrehzahl bis zum Stillstand abgebremst. Durch das Start-Stopp-Signal S wird der Regelvorgang im Prozessorsystem PS gestartet.

Durch die vorgebbare, wegabhängige Sollwert-Tabelle ist während der Anlauf- bzw. Bremsphase des Gleichstrommotors M eine geregelte Beschleunigung bzw. Verzögerung einstellbar. Während des Betriebes mit konstanter Drehzahl bleibt der Sollwert konstant.

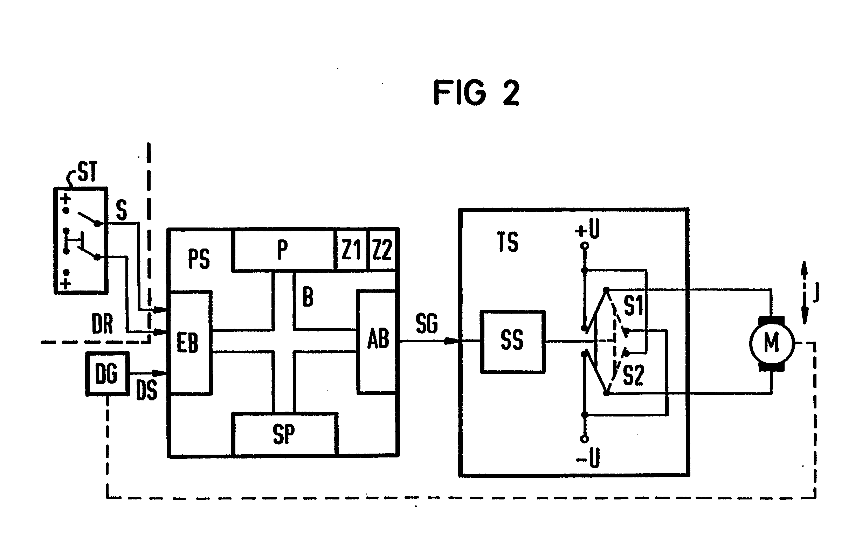

In der Fig. 2 sind in einem weiteren Ausführungsbeispiel einige aus der Fig. 1 bekannte Teil dargestellt. Dies sind im einzelnen das Steuerwerk ST, das ein Start-Stopp-Signal S und ein Drehrichtungssignal DR an das Prozessorsystem PS gibt, und der Gleichstrommotor M mit dem über den Anker gekoppelten Drehzahlgeber DG, das Drehsignal DS an das Prozessorsystem PS gibt.

Die in Fig. 2 dargestellte Drehzahlregelschaltung enthält eine an sich bekannte Transistorschaltbrücke TS, die zwei Schalter S1 und S2 und eine Schaltersteuerung SS aufweist. Über die Schalter S1 und S2 ist der Gleichstrommotor M zwischen eine positive und eine negative Spannungsquelle +U, −U anschaltbar. Eine der Spannungsquellen +U, −U kann ein Bezugspotential OV sein. Über die Schaltersteuerung SS, d.h. über die beiden Positionen der Schalter S1 und S2 ist die Richtung des Stromes I durch den Gleichstrommotor M einstellbar. Der Gleichstrommotor M wird also mit Wechselstrom betrieben. Vom Ausgabebaustein AB des Prozessorsystems PS wird ein Steuersignal SG an die Schaltersteuerung SS der Transistorschaltbrücke TS gegeben.

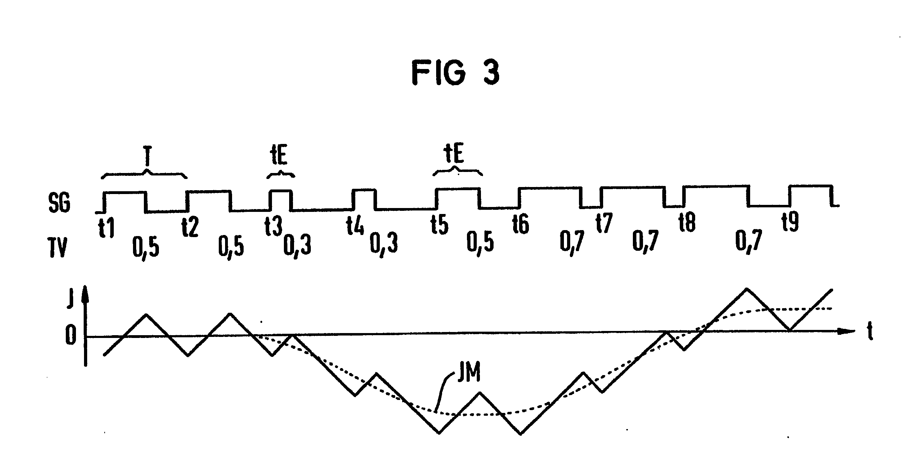

In Fig. 3 ist der Verlauf des Steuersignals SG in Abhängigkeit von der Zeit dargestellt. Zu den Zeitpunkten t1 bis t9 weist das Steuersignal SG jeweils eine ansteigende Flanke auf. Die Periodendauer T zwischen jeweils zwei aufeinanderfolgenden Zeitpunkten ist konstant. Die Impulsdauer tE des Pulses, die jeweils zu einem der Zeitpunkte t1 bis t9 beginnt, ist variabel. Durch den Quotienten aus der Impulsdauer tE und der Periodendauer T ist das digitale dargestellte Tastverhältnis TV des Steuersignals SG bestimmt.

In Fig. 3 ist weiter der Strom I durch den Gleichstrommotor M in Abhängigkeit von der Zeit t dargestellt. Mit einer gestrichelten Linie ist ein Mittelwert IM des Stromes I eingezeichnet. Der Mittelwert IM weist einen konstanten Wert auf, wenn das Tastverhältnis TV des Steuersignals 0,5 ist. Wenn das Tastverhältnis TV abweichend von diesem Wert kleiner 0,5 wird, das heißt die Impulsdauer tE ist kleiner als die Hälfte der Periodendauer T, so nimmt der Mittelwert IM ab. Wenn das Tastverhältnis TV einen Wert größer 0,5 aufweist, das heißt die Impulsdauer tE ist größer als die Hälfte der Periodendauer T, so nimmt der Mittelwert IM zu.

Im folgenden wird die Wirkungsweise der in Fig. 2 dargestellten Drehzahlregelschaltung erläutert.

Analog zu der aus Fig. 1 bekannten Drehzahlregelschaltung wird auch hier aus den Wechseln des Drehsignals DS über den Zählerstand des Zählers Z1 und die Subtraktion von einem Sollwert ein Differenzwert gebildet. Durch diesen Differenzwert ist in Verbindung mit dem Drehrichtungssignal DR der Mittelwert des Stromes durch den Gleichstrommotor M, d.h. die Impulsdauer tE bestimmt.

Der Impulsverlauf des vom Ausgabebaustein AB abgegebenen Steuersignals SG ist beispielsweise durch die festvorgegebene Periodendauer T und die Impulsdauer tE bestimmt.

Über das Steuersignal SG sind also die Verweilzeiten der Schalter S1 und S2 der Transistorschaltbrücke TS in ihrer jeweiligen Schalterstellung, und damit der Mittelwert IM des Stromes I durch den Gleichstrommotor M bestimmt.

Durch logische Verknüpfung im Prozessorsystem PS wird aus dem vom Steuerwerk ST abgegebenen Start-Stop-Signal S und dem Drehrichtungssignal DR der Gleichstrommotor M aus dem Stillstand in der gewünschten Drehrichtung bis zur Solldrehzahl beschleunigt bzw. aus dem Konstantlauf mit der Solldrehzahl bis zum Stillstand abgebremst. Durch das Start-Stop-Signal S wird der Regelvorgang im Prozessorsystem PS gestartet. Für das Tastverhältnis TV, bzw. für die Impulsdauer tE des Steuersignals SG gilt das Analoge wie für das Steuerwort SW.

Die Impulsdauer tE wird also über den Differenzwert aus dem Sollwert, bzw. dem wegabhängigen Sollwert und dem Zählerstand des Zählers Z1 gebildet. Dies geschieht entweder durch Adressierung der in tabellarischer Form gespeicherten Werte der Impulsdauer tE, oder durch Berechnung mit einem Steueralgorithmus.

Das Tastverhältnis TV bzw. die Impulsdauer tE hängen zusätzlich vom Drehrichtungssignal DR und von der Tatsache ab, ob die Drehzahl des Gleichstrommotors M über oder unter der Solldrehzahl liegt. Das Tastverhältnis TV beinhaltet sozusagen die Information des Steuerwortes SW und des Vorzeichensignals VS. Ein Tastverhältnis größer 0,5 entspricht beispielsweise einem positiven, und eines kleiner 0,5 einem negativen Vorzeichensignal VS. Der Wert der Abweichung von 0,5 entspricht dabei dem Steuerwort SW.

**Patentansprüche**

1. Drehzahlregelschaltung für einen Gleichstrommotor (M), mit einem mit der Welle des Gleichstrommotors (M) verbundenen Drehzahlgeber (DG), der ein der Drehzahl des Gleichstrommotors (M) proportionales binäres Drehsignal (DS) an eine Auswerte- und Steuerstufe (Prozessorsystem PS) abgibt, wobei das Prozessorsystem (PS) einen Timer/Event-Counter (Zähler Z1) aufweist, der die Impulsdauer des Drehsignals (DS) durch Zählen von Taktimpulsen eines Referenztaktes ermittelt und das Prozessorsystem während des Betriebes des Gleichstrommotors (M) mit konstanter Drehzahl einen ersten Differenzwert aus dem Wert der Impulsdauer des Drehsignals (DS) und einem in einem Speicher (SP) des Prozessorsystems (PS) abgelegten, einer Solldrehzahl entsprechenden Sollwert ermittelt, und das Prozessorsystem aus diesem ersten Differenzwert ein erstes Steuerkriterium (Steuerwort SW und Vorzeichensignal VS, Steuersignal SG) erzeugt, und während der Beschleunigungs- bzw. Bremsphase des Gleichstrommotors (M) eine Anzahl der Impulse des Drehsignals (DS) ermittelt, gekennzeichnet dadurch, daß das Prozessorsystem einen zweiten Differenzwert aus dem Wert der Impulsdauer des Drehsignals (DS) und einem wegabhängigen, in tabellarischer Form gespeicherten Sollwert, der durch die Anzahl bestimmt ist, ermittelt, daß Schaltmittel (Digital-Analogwandler DA und Stromregler SR, Transistorschaltbrücke TS) vorgesehen sind, über die aufgrund der Steuerkriterien (SW, VSD, SG) der Wert bzw. der Mittelwert und die Richtung eines Stromes (J) durch den Gleichstrommotor (M) einstellbar sind und daß das erste und/oder zweite Steuerkriterium jeweils ein dem entsprechenden Differenzwert zugeordnete, in tabellarischer Form gespeicherte Werte sind.

2. Drehzahlregelschaltung nach Anspruch 1, dadurch gekennzeichnet, daß die Steuerkriterien ein Steuerwort (SW) und ein Vorzeichensignal (VS) beinhalten, und daß ein Digital-Analogwandler (DA) und ein Stromregler (SR) vorgesehen sind, wobei der Digital-Analogwandler (DA) aus dem Steuerwort (SW) eine Referenzspannung (UR) erzeugt und damit zusammen mit dem Vorzeichensignal (VS) über den Stromregler (SR) der Wert und die Richtung des Stromes (I) einstellbar sind.

3. Drehzahlregelschaltung nach Anspruch 1, dadurch gekennzeichnet, daß die Steuerkriterien ein pulsdauermoduliertes Steuersignal (SG) beinhalten, und daß eine Transistorschaltbrücke (TS) vorgesehen ist, über die aufgrund eines Tastverhältnisses (TV) des Steuersignals (SG) der Mittelwert (IM) des Stromes (I) einstellbar ist.

## Claims

1. Speed control circuit for a DC motor (M), comprising a pulse transmitter (DG) which is connected to the shaft of the DC motor (M) and which provides a binary rotation signal (DS), which is proportional to the speed of the DC motor (M), to an evaluating and control stage (processor system PS), wherein the processor system (PS) exhibits a timer/event-counter (counter Z1) which determines the pulse duration of the rotation signal (DS) by counting clock pulses of a reference clock and the processor system, whilst the DC motor (M) is operating with a constant speed, determines a first difference value from the value of the pulse duration of the rotation signal (DS) and a nominal value which is stored in a store (SP) of the processor system (PS) and corresponds to a nominal speed, and the processor system generates from this first difference value a first control criterion (control word SW and sign signal VS, control signal SG), and determines during the acceleration and deceleration phase of the DC motor (M) a number of the pulses of the rotation signal (DS), characterized in that the processor system determines a second difference value from the value of the pulse duration of the rotation signal (DS) and a distance-dependent nominal value stored in table form which is determined by the number, that switching means (Digital/analog converter DA and current regulator SR, transistor-switchable link TS) are provided via which the value or the mean value and the direction of a current (J) through the DC motor (M) can be set on the basis of the control criteria (SW, VSD, SG), and that the first and/or second control criterion are in each case values stored in table form and associated with the corresponding difference value.

2. Speed control circuit according to Claim 1, characterized in that the control criteria contain a control word (SW) and a sign signal (VS), and that a digital/analog converter (DA) and a current regulator (SR) are provided, in which arrangement the digital/analog converter (DA) generates from the control word (SW) a reference voltage (UR) and the value and the direction of the current (I) can be set by this means, together with the sign signal (VS), via the current regulator (SR).

3. Speed control circuit according to Claim 1, characterized in that the control criteria contain a pulse-duration-modulated control signal (SG), and that a transistor-switchable link (TS) is provided via which the mean value (IM) of the current (I) can be set on the basis of a pulse-duty factor (TV) of the control signal (SG).

## Revendications

1. Circuit de réglage de la vitesse de rotation pour un moteur à courant continu (M), comportant un capteur (DG) de la vitesse de rotation, qui est relié à l'arbre du moteur à courant continu (M) et envoie à un étage d'évaluation et de commande (système à processeur PS), un signal binaire de rotation (DS) proportionnel à la vitesse de rotation du moteur à courant continu (M), et dans lequel le système à processeur (PS) comporte un Timer/Event-Counter (compteur Z1), qui détermine la durée des impulsions du signal de rotation (DS) par comptage d'impulsions d'une cadence de référence, et le système à processeur détermine, pendant le fonctionnement du moteur à courant continu (M) à une vitesse de rotation constante, une première valeur de différence à partir de la valeur de la durée des impulsions du signal de rotation (DS) et d'une valeur de consigne mémorisée dans une mémoire (SP) du système à processeur (PS) et correspondant à une vitesse de rotation de consigne, et le système à processeur produit, à partir de cette première valeur de différence, un premier critère de commande (mot de commande SW et signal de signe VS, signal de commande SG) et, pendant la phase d'accélération ou de freinage du moteur à courant continu (M), détermine un nombre des impulsions du signal de rotation (DS), caractérisé en ce que le système à processeur détermine une seconde valeur de différence à partir de la valeur de la durée des impulsions du signal de rotation (DS) et d'une valeur de consigne, qui dépend de la distance, qui est mémorisée sous forme tabulaire et qui est déterminée par le nombre, qu'il est prévu des moyens de commutation (convertisseur numérique/analogique DA et régulateur de courant SR, pont de commutation à transistors TS), à l'aide desquels la valeur ou la valeur moyenne et la direction d'un courant (J) traversant le moteur à courant continu (M) sont réglables sur la base des critères de commande (SW, VSD, SG), et que le premier et/ou le second critère de commande sont associés respectivement à des valeurs associées aux valeurs correspondantes de la différence et sont mémorisées sous forme tabulaire.

2. Circuit de réglage de la vitesse de rotation suivant la revendication 1, caractérisé par le fait que les critères de commande incluent un mot de commande (SW) et un signal de signe (VS), et qu'il est prévu un convertisseur numérique/analogique (DA) et un régulateur de courant (SR), le convertisseur numérique/analogique (DA) produisant une tension de référence (UR) à partir du mot de commande (SW), et la valeur et le sens du courant (I) étant réglables de ce fait conjointement avec le signal du signe (VS) par l'intermédiaire du régulateur de courant (SR).

3. Circuit de réglage de la vitesse de rotation suivant la revendication 1, caractérisé par le fait que les critères de commande incluent un signal de commande (SG) modulé selon une modulation d'impulsions en durée, et qu'il est prévu un pont de commutation à transistors (TS), à l'aide duquel la valeur moyenne (IM) du courant (I) est réglable sur la base d'un taux d'impulsions (TV) du signal de commande (SG).

# FIG 1

EP 0 196 539 B1

# FIG 2

EP 0 196 539 B1

# FIG 3

EP 0 196 539 B1